# EUROPÄISCHE PATENTSCHRIFT

(11) **EP 3 510 293 B1**
(45) Veröffentlichungstag und Bekanntmachung des Hinweises auf die Patenterteilung: **10.01.2024**
(21) Anmeldenummer: 17765093.4
(22) Anmeldetag: 22.08.2017
(51) Int. Cl.: F16D 25/08, F16D 23/14

(54) **SELBSTREINIGUNGSMECHANISMUS FÜR PNEUMATISCHEN ZENTRALAUSRÜCKER**
SELF-CLEANING MECHANISM FOR PNEUMATIC CENTRAL CLUTCH RELEASE
MÉCANISME D'AUTONETTOYAGE POUR CYLINDRE RÉCEPTEUR D'EMBRAYAGE CONCENTRIQUE PNEUMATIQUE

(30) Priorität: 12.09.2016 DE 102016117091
(43) Veröffentlichungstag der Anmeldung: 17.07.2019
(73) Patentinhaber: KNORR-BREMSE Systeme für Nutzfahrzeuge GmbH, 80809 München (DE)
(72) Erfinder: WINTER, Simon, 81241 München (DE)
(86) Internationale Anmeldenummer: PCT/EP2017/071142
(87) Internationale Veröffentlichungsnummer: WO 2018/046294

(56) Entgegenhaltungen:
- EP-A2- 0 775 619
- DE-A1- 10 253 023
- DE-A1-102010 021 806

## Beschreibung

Die vorliegende Erfindung bezieht sich auf einen Selbstreinigungsmechanismus für einen pneumatischen Zentralausrücker.

Zwischen Motor und Getriebe eines Kraftfahrzeugs ist in der Regel eine Kupplung angeordnet, um den Kraftschluss zwischen Motor und Getriebe bei Bedarf herzustellen bzw. zu trennen, beispielsweise um die Getriebeübersetzung (den Gang) zu wechseln. Falls das Betätigen der Kupplung pneumatisch erfolgt, ist gemäß des Standes der Technik ein pneumatischer Zentralausrücker innerhalb einer Fahrzeugkupplungsglocke, die zwischen Motor und Getriebe angeordnet ist, vorgesehen.

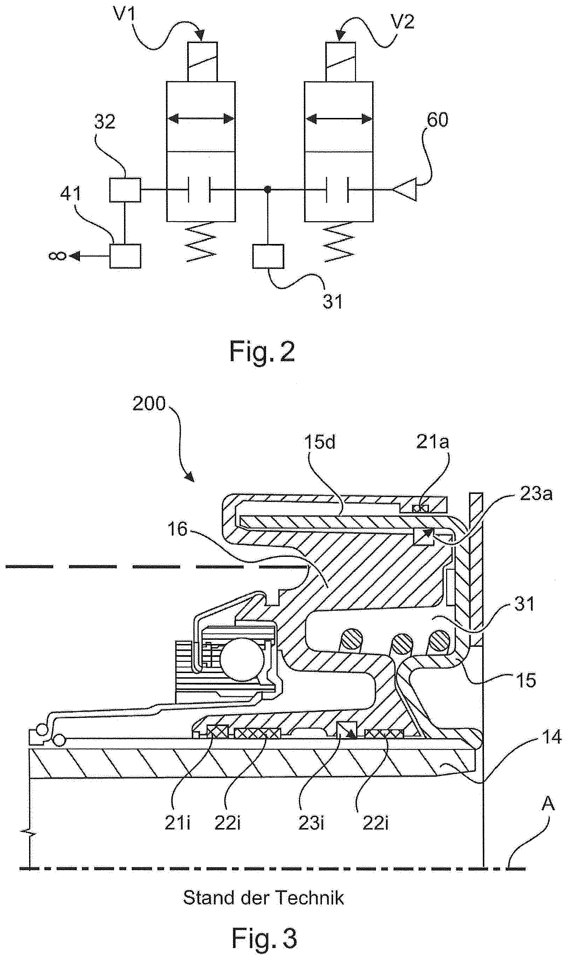

Ein pneumatischer Zentralausrücker gemäß des Standes der Technik ist beispielsweise aus der DE 10 2011 078 125 A1 bekannt und wird anhand der beigefügten Fig. 3 dieses Anmeldetextes nachfolgend erläutert. Der Zentralausrücker weist eine Hohlwelle 14 zum Lagern eines Ausrückkolbens 16 auf, der in Richtung der Achse A der Hohlwelle 14 bewegbar ist. Des Weiteren weist der Zentralausrücker ein den Ausrückkolben 16 wenigstens teilweise umschließendes Gehäuse 15 auf, um zwischen Hohlwelle 14, Gehäuse 15 und Ausrückkolben 16 eine Druckkammer 31 zu bilden, die gegenüber der Umgebung abgedichtet und mit einer Druckluftquelle verbindbar ist. Falls die Druckkammer 31 mit Druckluft beaufschlagt wird, bewegt sich der Ausrückkolben 16 in Fig. 3 nach links. Die Druckkammer 31 wird mittels den pneumatischen Dichtungen 23a und 23i von der Umgebungsatmosphäre abgedichtet. Des Weiteren sollen Staubdichtungen 21a und 23i vor eindringenden Partikeln schützen.

Koaxial und benachbart zum Zentralausrücker befindet sich die in Fig. 3 nicht dargestellte Kupplung (in Fig. 3 links neben dem Zentralausrücker), welche durch den Zentralausrücker direkt betätigt wird. Die Kupplung erzeugt staubförmigen Kupplungsabrieb. Dieser Kupplungsabrieb ist aufgrund seiner abrasiven Wirkung schädlich für Gleitlager 22i und pneumatische Dichtungen 23a, 23i des Zentralausrückers. Verunreinigungen wie Kupplungsabrieb, der einmal zu den Gleitlagern 22i oder den pneumatischen Dichtungen 23a, 23i vorgedrungen ist, erhöht deren Verschleiß und verringert folglich deren Lebensdauer.

Der in Fig. 3 dargestellte Zentralausrücker gemäß des Standes der Technik wird im radial außenliegenden Bereich 200 lediglich durch eine Staubdichtung 21a vor eindringendem Kupplungsabrieb geschützt. Staubdichtungen bieten allerdings keinen vollständigen Schutz vor eindringendem Kupplungsabrieb. Kupplungsabrieb, der über den radial außenliegenden Bereich 200, an der Staubdichtung 21a vorbei, in den Zentralausrücker eindringt, dringt außerdem zu einer radial außenliegenden pneumatischen Dichtung 23a vor, sowie durch die Druckkammer 31 hindurch zu radial innenliegenden Gleitlagern 22i sowie einer radial innenliegenden pneumatischen Dichtung 23i. Alle diese Elemente werden durch den Kupplungsabrieb angegriffen.

Die DE 10 2010 021 806 A1 beschreibt eine Einrichtung mit wenigstens einem ersten Bauteil und einem gegenüber dem ersten Bauteil beweglich angeordneten zweiten Bauteil, dadurch gekennzeichnet, dass in einer Nut des ersten Bauteils eine Formdichtung angeordnet ist, die mit dem zweiten Bauteil in Kontakt ist, wobei ein auf der einen Seite der Formdichtung zwischen dem ersten und dem zweiten Bauteil gebildeter erster Raum mit einem ersten Druck beaufschlagbar ist und ein auf der gegenüberliegenden Seite der Formdichtung zwischen dem ersten und dem zweiten Bauteil gebildeter zweiter Raum mit einem zweiten Druck beaufschlagbar ist, und die Formdichtung zusammen mit dem ersten Bauteil wenigstens ein Überströmventil bildet. Dabei weist die Formdichtung wenigstens einen verschließbaren Durchgangskanal auf, über den der erste Raum mit dem zweiten Raum verbindbar ist.

Die EP 0 775 619 A2 beschreibt einen Arbeitszylinder mit einem Federspeicherteil und einem Betriebsteil, in dem eine Federkammer des Federspeicherteils über eine Druckausgleichsleitung mit einer Atmosphärenkammer des Betriebsteils verbunden ist, dadurch gekennzeichnet, dass die Druckausgleichsleitung als Drosselleitung ausgebildet ist.

Es ist eine Aufgabe der Erfindung, eine Konstruktion vorzusehen, mittels welcher ein Eindringen von Kupplungsabrieb in einen pneumatischen Zentralausrücker minimiert wird, um die Lebensdauer von Lagern und Dichtungen innerhalb des Zentralausrückers zu erhöhen.

Die Aufgabe wird gelöst durch eine Ausgestaltung gemäß der unabhängigen Ansprüche. Vorteilhafte Weiterbildungen sind Gegenstand der Unteransprüche.

Erfindungsgemäß werden radial außenliegende Gleitlager und pneumatische Dichtungen des Zentralausrückers nicht über Staubdichtungen vor Kupplungsabrieb und anderen Verunreinigungen aus der Umgebung geschützt, sondern durch das Vorsehen einer Reinigungskammer, in welcher die zu schützenden Komponenten angeordnet sind. Erfindungsgemäß sind die zu schützenden Komponenten innerhalb der Reinigungskammer angeordnet, wobei der Fluiddruck innerhalb der Reinigungskammer wenigstens zeitweise größer ist als der Umgebungsdruck auf jeden Fall aber mindestens gleich dem Umgebungsdruck. Dadurch wird verhindert, dass Verunreinigungen wie Kupplungsabrieb in die Reinigungskammer eindringen.

Bei jeder Bewegung des Ausrückkolbens, also sowohl beim Einrücken als auch beim Ausrücken des Kolbens, wird der Fluiddruck innerhalb der Reinigungskammer erhöht. Hierdurch wird der Überdruck innerhalb der Reinigungskammer gegenüber der Umgebung erhöht, es wird eine Schutzatmosphäre innerhalb der Reinigungskammer ausgebildet. Falls in die Reinigungskammer bereits Verschmutzungen eingedrungen sind, oder aktuell eindringen, werden diese durch den Überdruck wieder nach außen gedrückt.

Resultierend daraus herrscht in der Reinigungskammer gegenüber der Umgebungsatmosphäre ständig ein latenter Überdruck und hierdurch ein latenter Abtransport von Verunreinigungen von der Reinigungskammer in die Umgebungsatmosphäre, durch ein Abblasen von Luft aus der Reinigungskammer in die Umgebungsatmosphäre.

Es gilt allgemein:
(Fluiddruck in der Druckkammer) ≥ (Fluiddruck in der Reinigungskammer) ≥ (Fluiddruck in der Umgebungsatmosphäre).

Ein Vorteil aus der erfindungsgemäßen Ausgestaltung ist, dass entweder die Lebenszeit der pneumatischen Dichtungen und Gleitlager erhöht werden kann, oder dass diese weniger belastbar ausgelegt und somit günstiger ausgeführt werden können.

Die Verbindung der Reinigungskammer zur Umgebungsatmosphäre wird erfindungsgemäß mittels eines Entlüftungskanals mit hinreichend kleinem Kanalquerschnitt ausgeführt, sodass zwar Fluid aus der Reinigungskammer in die Umgebung entweichen kann, der Fluiddruck innerhalb der Reinigungskammer aber über einen langen Zeitraum über dem Fluiddruck der Umgebung liegt. Vorzugsweise entweicht durch den Entlüftungskanal lediglich eine solche Gasmenge in die Umgebung, sodass der Überdruck in der Reinigungskammer bis zur nächsten Bewegung des Ausrückkolbens erhalten bleibt. Gemäß einer bevorzugten Ausführungsform wird der Querschnitt des Entlüftungskanals so angepasst, dass diese Bedingung bei einer durchschnittlichen Bewegungscharakteristik des Ausrückkolbens erfüllt ist.

Gemäß einer bevorzugten Ausführungsform ist ein Entlüftungskanal mit einem Strömungsdiffusor, wie beispielsweise einem Filter, gefüllt, um die durchströmende Gasmenge festzulegen, sowie um ein Eindringen von Partikeln in die Reinigungskammer unterstützend zu verhindern.
Fig. 1 zeigt ein Ausführungsbeispiel eines erfindungsgemäß ausgestalteten Zentralausrückers in einer Halbschnittansicht.
Fig. 2 zeigt einen beispielhaften pneumatischen Schaltplan des Ausführungsbeispiels aus Fig. 1.
Fig. 3 zeigt einen Zentralausrücker gemäß des Standes der Technik in einer Halbschnittansicht.
Fig. 4 zeigt ein weiteres Ausführungsbeispiel eines erfindungsgemäß ausgestalteten Zentralausrückers in einer Halbschnittansicht.

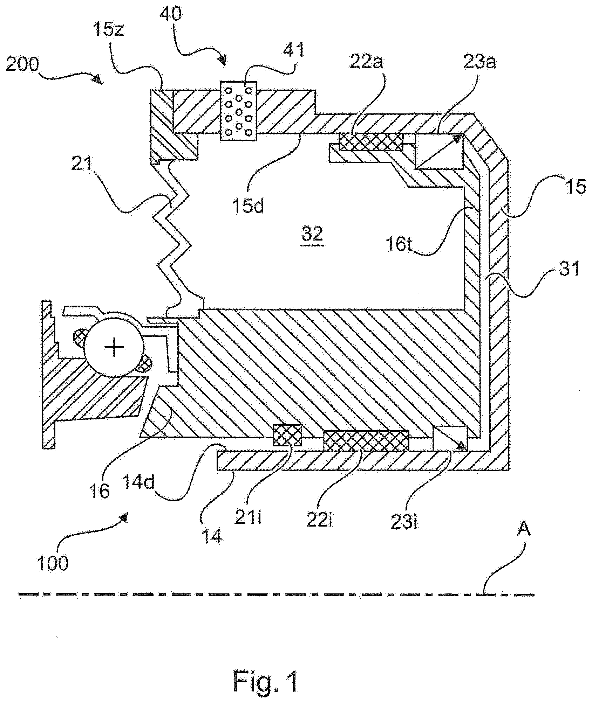

Der in **Fig. 1** dargestellte Zentralausrücker ist koaxial zu einer Hohlwelle 14, die eine Symmetrieachse A aufweist, angeordnet. Von dem in Fig. 1 rechtseitigen Ende der Hohlwelle 14 erstreckt sich ein Teil eines Gehäuses 15 in radialer Richtung scheibenförmig nach außen. Anschließend an diese Flanke erstreckt sich ein radial außenliegender zylinderförmiger Teil des Gehäuses in (entgegengesetzter) Richtung der Achse A, parallel zu der Hohlwelle 14, um in der Halbschnittansicht einen U-förmigen Querschnitt eines quer liegenden "U's" auszubilden. Zwischen dem radial außenliegenden zylinderförmigen Teil des Gehäuses 15, dem scheibenförmigen Teil des Gehäuses 15, und der Hohlwelle 14 wird in Zusammenwirkung mit einer später näher beschriebenen flexiblen Dichtung 21 (hier in Form einer Faltenbalgdichtung) ein Raum ausgebildet, der nachfolgend noch näher beschrieben wird. Die Hohlwelle 14 und das Gehäuse 15 sind in diesem Ausführungsbeispiel einstückig ausgebildet.

Des Weiteren befindet sich innerhalb des Raums zwischen dem radial außenliegenden zylinderförmigen Teil des Gehäuses 15 und der Hohlwelle 14 ein Ausrückkolben 16.

Dieser Ausrückkolben 16 ist in Richtung der Achse A nach links und rechts verschiebbar. In der in Fig 1 dargestellten Lage befindet sich der Ausrückkolben 16 in einer rechtsseitigen Endlage, in welcher der Ausrückkolben 16 maximal in das Gehäuse 15 eingefahren (eingerückt) ist. Der Ausrückkolben 16 ist in Richtung der Achse A nach links bewegbar, um aus dem Gehäuse 15 auszurücken. Durch das Gehäuse 15, die Hohlwelle 14 und den Ausrückkolben 16 wird eine Druckkammer 31 gebildet. Diese Druckkammer 31 wird durch eine radial innenliegende pneumatische Dichtung 23i sowie durch eine radial außenliegende pneumatische Dichtung 23a abgedichtet. Die radial innenliegende pneumatische Dichtung 23i dichtet auf einer Dichtfläche 14d der Hohlwelle ab, wobei die radial außenliegende pneumatische Dichtung 23a auf einer Dichtfläche 15d des Gehäuses abdichtet.

Der Ausrückkolben 16 wird innerhalb des Gehäuses 15 durch ein radial innenliegendes Gleitlager 22i sowie durch ein radial außenliegendes Gleitlager 22a auf der Achse A axial verschieblich gelagert. Das radial innenliegende Gleitlager 22i ist zwischen der Hohlwelle 14 und dem Ausrückkolben 16 angeordnet. Das radial außenliegende Gleitlager 22a ist zwischen dem zylinderförmigen Teil des Gehäuses 15 und dem Ausrückkolben 16 angeordnet.

Der von dem Gehäuses 15 und der Hohlwelle 14 umschlossene Raum, in welchem der Ausrückkolben 16 verschiebbar angeordnet ist, wird durch eine Abtrennung 16t des Ausrückkolbens 16 aufgeteilt und abgetrennt, gesehen gemäß Fig. 1 in die Druckkammer 31 rechtsseitig der Abtrennung 16t, und in eine Reinigungskammer 32 linksseitig der Abtrennung 16t.

Die radial außenliegende pneumatische Dichtung 23a dichtet die Druckkammer 31 gegenüber der Reinigungskammer 32 ab. Die Reinigungskammer 32 erstreckt sich zwischen dem Ausrückkolben 16, dem radial außenliegenden zylinderförmigen Teil des Gehäuses 15, sowie der flexiblen Dichtung 21, die zwischen dem Gehäuse 15 und dem Ausrückkolben 16 abdichtet. Das Gehäuse 15 weist dabei ein im Wesentlichen ringförmiges Zwischenstück 15z auf, das zwischen der flexiblen Dichtung 21 und dem eigentlichen Gehäuse 15 abgeordnet ist.

Die Druckkammer 31 ist fluidisch mit mindestens einem Ventil V2 (siehe Fig. 2) verbindbar, das zum Einleiten von Druckluft aus einer Fluiddruckquelle, die in dieser Ausführungsform als Druckluftquelle 60 angedeutet ist, in die Druckkammer 31 vorgesehen ist. Immer wenn Druckluft in die Druckkammer 31 eingeleitet wird, bewegt sich der Ausrückkolben 16 zum Ausrücken nach links (gesehen gemäß Fig. 1). Dabei vergrößert sich das Volumen der Druckkammer 31, wobei das Volumen der Reinigungskammer 32 verkleinert wird, worauf weiter unten noch eingegangen wird. Beim Ausrücken des Ausrückkolbens 16 nach links bewegt sich der radial innenliegende Teil der flexiblen Dichtung 21 zusammen mit dem Ausrückkolben nach links, wohingegen der radial außenliegende Teil der Dichtung 21 weiterhin an dem Gehäuse 15 anliegt, genauer an dem Zwischenstück 15z. Dabei verbleibt das Gehäuse 15 inklusive dem Zwischenstück 15z in seiner ursprünglichen Lage, ohne sich mit dem Ausrückkolben 16 nach links zu bewegen. Folglich wird die flexible Dichtung beim Ausrücken des Ausrückkolbens 16 gedehnt und gekippt. Wenn sich der Ausrückkolben 16 in einer nach links ausgerückten Position befindet, befindet sich der radial innenliegende Teil der flexiblen Dichtung 21 in einer nach links verschoben Lage, wohingegen der radial außenliegende Teil der flexiblen Dichtung 21 nicht verschoben ist. Dabei weist die flexible Dichtung 21 eine im Querschnitt konische Gestalt auf und dichtet weiterhin zwischen dem Ausrückkolben 16 und dem Gehäuse 15 ab.

Beim Ausrücken des Ausrückkolbens 16 (bewegen nach links) verkleinert sich das Volumen der Reinungskammer 32 durch das Bewegen der Abtrennung 16t nach links. Gleichzeitig vergrößert sich das Volumen der Reinigungskammer 32 durch das Bewegen des radial innenliegenden Teils der flexiblen Dichtung 21 nach links. Diese Vergrößerung fällt allerdings geringer aus als die Verkleinerung. In der Summe wird somit beim Ausrücken des Ausrückkolbens 16 (bewegen nach links) eine Verkleinerung des Volumens der Reinigungskammer 32 verursacht.

Des Weiteren ist die Druckkammer 31 über mindestens ein Ventil V1 mit der Reinigungskammer 32 fluidisch verbindbar (siehe Fig. 2). Zum Einrücken des ausgerückten Kolbens 16 wird das Ventil V1 geöffnet, wodurch Druckluft aus der Druckkammer 31 in die Reinigungskammer 32 geleitet wird. Die Druckkammer 31 wird dabei entlüftet, und der Ausrückkolben 16 rückt ein, bewegt sich nach rechts.

Folglich wird der Gasdruck innerhalb der Reinigungskammer 32 sowohl beim Einrücken (Bewegen nach rechts) des Kolbens 16 erhöht, durch eine Überleitung von Druckluft aus der Druckkammer 31 in die Reinigungskammer 32, als auch beim Ausrücken (Bewegen nach links) des Kolbens 16, durch Volumenverkleinerung der Reinigungskammer 32.

Das Gehäuse 15 weist an einer Stelle, die immer ein Teil der Reinigungskammer 32 und niemals ein Teil der Druckkammer 31 ist, einen Entlüftungskanal 40 auf. Dieser Entlüftungskanal 40 verbindet die Reinigungskammer 32 fluidisch mit der Umgebung, sodass Gasvolumen innerhalb der Reinigungskammer 32, das unter einem höheren Druck als der Umgebungsdruck steht, von der Reinigungskammer 32 in die Umgebung entweichen kann. Innerhalb des Entlüftungskanals ist im vorliegenden Ausführungsbeispiel ein Filter 41 angeordnet, der ein Durchströmtwerden von Gasen erlaubt, Partikel wie beispielsweise Kupplungsabrieb aber zurückhält.

Es gilt, dass der Gasdruck innerhalb der Druckkammer 31 immer größer ist als (oder gleich groß ist wie) der Gasdruck innerhalb der Reinigungskammer 32. Des Weiteren gilt, dass der Gasdruck innerhalb der Reinigungskammer 32 immer größer ist als (oder gleich groß ist wie) der Gasdruck in der Umgebung.

Im radial außenliegenden Bereich 200 des Zentralausrückers fallen große Mengen an Kupplungsabrieb an, wohingegen der radial innenliegende Bereich 100 des Zentralausrückers weniger stark durch Kupplungsabrieb belastet ist.

Als unter Druck stehendes Fluid wird in dieser Ausführungsform Druckluft verwendet. Darüber hinaus ist die Verwendung von beliebigen kompressiblen Fluiden (Gasen) denkbar.

**Fig. 2** zeigt den pneumatischen Schaltplan des Ausführungsbeispiels aus Fig. 1. Die Druckluftquelle 60 ist durch das Ventil V2 fluidisch mit der Druckkammer 31 verbindbar. Die Druckkammer 31 ist über das Ventil V1 fluidisch mit der Reinigungskammer 32 verindbar. Die Reinigungskammer 32 ist des Weiteren mit der Umgebung fluidisch verbunden, über den Entlüftungskanal 40 bzw. Filter 41.

Es wird ein Selbstreinigungsmechanismus für einen pneumatischen Zentralausrücker offenbart, der aufweist: eine Hohlwelle 14 zum Lagern eines Ausrückkolbens 16, der in Richtung einer Achse A der Hohlwelle 14 bewegbar ist; ein den Ausrückkolben 16 wenigstens teilweise umschließendes Gehäuse 15, um zwischen Hohlwelle 14, Gehäuse 15 und Ausrückkolben 16 eine Druckkammer 31 zu bilden, die Gegenüber der Umgebung abgedichtet und mit einer Fluiddruckquelle 60 verbindbar ist; wobei fluidisch zwischen der Druckkammer 31 und Umgebung eine Reinigungskammer 32 angeordnet ist, die über einen Entlüftungskanal 40 mit der Umgebung verbindbar ist, wobei Druckkammer 31 und Reinigungskammer 32 über ein erstes Ventil V1 fluidisch miteinander verbindbar sind.

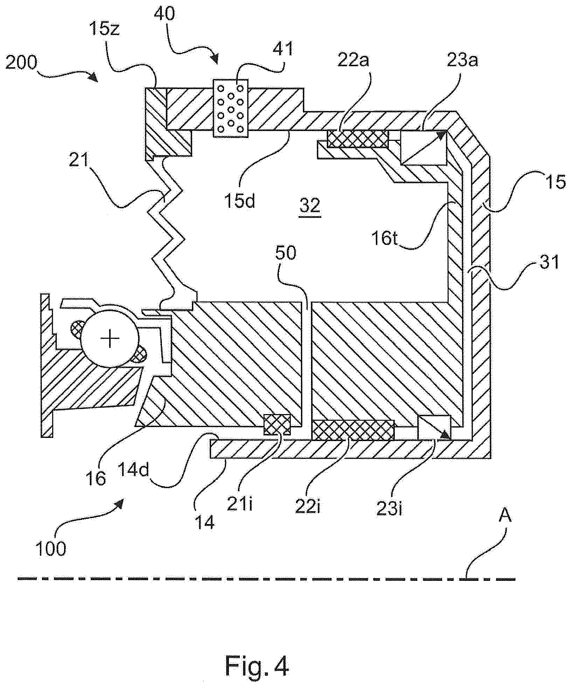

Der in **Fig. 4** dargestellte Zentralausrücker weist alle Merkmale des in Fig. 1 dargestellten Zentralausrückers auf. Zusätzlich zu dem in Fig. 1 dargestellten Zentralausrücker ist allerdings ein weiterer Entlüftungskanal 50 vorgesehen, der von der Reinigungskammer 32 radial nach innen verläuft, durch den Ausrückkolben 16 hindurch. Der Entlüftungskanal 50 ist in dieser Ausführungsform als Bohrung ausgeführt. Der Entlüftungskanal 50 mündet in dem Zwischenraum zwischen Ausrückkolben 16 und Hohlzylinder 14. In diesem Zwischenraum sind außerdem, wie auch bei dem in Fig. 1 dargestellten Zentralausrücker, die radial innenliegende Staubdichtung 21i, das radial innenliegende Gleitlager 22i, sowie die radial innenliegende pneumatische Dichtung 23i angeordnet. Der Entlüftungskanal 50 ist analog zu dem Entlüftungskanal 40 dazu vorgesehen, dass auch durch den Entlüftungskanal 50 das in der Reinigungskammer 32 unter Überdruck stehende Fluid, an der radial innenliegenden Staubdichtung 21i vorbei, in die Umgebung entweichen kann. Hierdurch herrscht in der Darstellung der Fig. 4 direkt rechts neben der radial innenliegenden Staubdichtung 21i ein höherer Fluiddruck als direkt links neben dieser. Hierdurch wird auch ein Eindringen von Kupplungsabrieb durch den radial innenliegenden Bereich 100 verhindert, insbesondere an der radial innenliegenden Staubdichtung 21i vorbei, hin zu dem radial innenliegenden Gleitlager 22i sowie hin zu der radial innenliegenden pneumatischen Dichtung 23i. Wie in Fig. 4 gezeigt, kann der Entlüftungskanal 50 in den Raum zwischen der Staubdichtung 21i und dem Gleitlager 22i münden; alternativ kann er in den Raum zwischen der pneumatischen Dichtung 23i und dem Gleitlager 22i münden (nicht dargestellt). Des Weiteren kann der Entlüftungskanal 50 alternativ zu dem Entlüftungskanal 40 vorgesehen sein.

Bezüglich der Darstellungen aus Fig. 1 und aus Fig. 4 wird klarstellend erwähnt, dass sich bei einem Ausrücken (Bewegen nach links) des Ausrückkolbens 16 das radial außenliegende Gleitlager 22a niemals über den Entlüftungskanal 40 bewegt, und die radial innenliegende Staubdichtung 21i stets mit der Dichtfläche der Hohlwelle 14d in Kontakt bleibt.

### BEZUGSZEICHENLISTE

- 14: Hohlwelle
- 14d: Dichtfläche der Hohlwelle
- 15: Gehäuse
- 15d: Dichtfläche des Gehäuses
- 16: Ausrückkolben
- 16t: Abtrennung

- 21: Dichtung
- 21i: Staubdichtung, radial innenliegend
- 21a: Staubdichtung, radial außenliegend
- 22i: Gleitlager, radial innenliegend
- 22a: Gleitlager, radial außenliegend
- 23i: Pneumatische Dichtung, radial innenliegend
- 23a: Pneumatische Dichtung, radial außenliegend

- 31: Druckkammer
- 32: Reinigungskammer
- 40: Entlüftungskanal
- 41: Filter
- 50: Entlüftungskanal

- 60: Fluiddruckquelle (Druckluftquelle)

- 100: radial innenliegender Bereich des Zentralausrückers
- 200: radial außenliegender Bereich des Zentralausrückers

- A: Symmetrieachse der Hohlwelle

- V1: Erstes Ventil
- V2: Zweites Ventil

## Patentansprüche

1. Selbstreinigungsmechanismus für einen pneumatischen Zentralausrücker, der aufweist:
einen koaxial um eine Hohlwelle (14) angeordneten Ausrückkolben (16), der in Richtung einer Achse (A) der Hohlwelle (14) bewegbar gelagert ist;
ein den Ausrückkolben (16) wenigstens teilweise umschließendes Gehäuse (15), um zwischen Hohlwelle (14), Gehäuse (15) und Ausrückkolben (16) eine Druckkammer (31) zu bilden, die gegenüber der Umgebung abgedichtet und mit einer Fluiddruckquelle (60) verbindbar ist;
**dadurch gekennzeichnet, dass**
fluidisch zwischen der Druckkammer (31) und Umgebung eine Reinigungskammer (32) angeordnet ist, die über einen Entlüftungskanal (40) mit der Umgebung verbindbar ist,
wobei der Kanalquerschnitt des Entlüftungskanals (40) hinreichend klein so konfiguriert ist, dass ein innerhalb der Reinigungskammer (32) gegenüber der Umgebung unter Überdruck stehendes Fluid in die Umgebung diffundiert, wobei der Fluiddruck innerhalb der Reinigungskammer (32) wenigstens zeitweise größer als ein Umgebungsdruck auf jeden Fall aber mindestens gleich dem Umgebungsdruck ist, und wobei der Selbstreinigungsmechanismus so konfiguriert ist, dass sowohl bei einem Einrücken als auch bei einem Ausrücken des Kolbens der Fluiddruck innerhalb der Reinigungskammer (32) erhöht wird.

2. Selbstreinigungsmechanismus für einen pneumatischen Zentralausrücker gemäß des vorhergehenden Anspruchs, wobei ein erstes Ventil (V1), insbesondere ein Magnetventil vorgesehen ist, über das die Druckkammer (31) und die Reinigungskammer (32) fluidisch miteinander verbindbar sind.

3. Selbstreinigungsmechanismus gemäß einem der vorhergehenden Ansprüche, wobei ein Lager (22a) zum Lagern des Ausrückkolbens (16) und eine pneumatische Dichtung (23a) zum Abdichten der Druckkammer (31) innerhalb der Reinigungskammer (32) vorgesehen sind.

4. Selbstreinigungsmechanismus gemäß einem der vorhergehenden Ansprüche, wobei die Druckkammer (31) und die Reinigungskammer so zueinander angeordnet sind, dass sie miteinander in Wirkverbindung stehen, so dass eine Volumenzunahme der Druckkammer (31) eine Volumenreduktion der Reinigungskammer (32) bewirkt.

5. Selbstreinigungsmechanismus gemäß einem der vorhergehenden Ansprüche, wobei die Druckkammer (31) und die Reinigungskammer (32) so zueinander angeordnet sind, dass bei einer Volumenabnahme der Druckkammer (31) ein verdrängtes Gasvolumen aus der Druckkammer (31) über das erste Ventil (V1) in die Reinigungskammer (32) geleitet wird.

6. Selbstreinigungsmechanismus gemäß einem der vorhergehenden Ansprüche, wobei ein Strömungsdiffusor fluidisch zwischen Reinigungskammer (32) und Umgebung angeordnet ist.

7. Selbstreinigungsmechanismus gemäß des vorhergehenden Anspruchs, wobei der Strömungsdiffusor ein Filter (41) ist, der in dem Entlüftungskanal (40) angeordnet ist.

8. Selbstreinigungsmechanismus gemäß einem der vorhergehenden Ansprüche, wobei der Entlüftungskanal (40) fluidisch zwischen der Reinigungskammer (32) und der radial außen liegenden Umgebung angeordnet ist, wobei der Entlüftungskanal (40) dazu eingerichtet ist, ein innerhalb der Reinigungskammer (32) gegenüber der Umgebung unter Überdruck stehendes Fluid in die Umgebung entweichen zu lassen.

9. Selbstreinigungsmechanismus gemäß einem der vorhergehenden Ansprüche, wobei der Entlüftungskanal (50) fluidisch zwischen der Reinigungskammer (32) und der radial innenliegenden Umgebung angeordnet ist, wobei der Entlüftungskanal (50) dazu eingerichtet ist, ein innerhalb der Reinigungskammer (32) gegenüber der Umgebung unter Überdruck stehendes Fluid in die Umgebung entweichen zu lassen.

10. Selbstreinigungsverfahren für einen ausrückenden pneumatischen Zentralausrücker gemäß einem der Ansprüche 1 bis 9, das die Schritte aufweist:
- Beaufschlagen der Druckkammer (31) mit unter Überdruck stehendem Fluid, so dass der Ausrückkolben (16) ausrückt;
- Verringern des Volumens der Reinigungskammer (32) durch den ausrückenden Ausrückkolben (16);
- Ablassen von unter Überdruck stehendem Fluid aus der Reinigungskammer (32) in die Umgebung, über den Entlüftungskanal (40, 50).

11. Selbstreinigungsverfahren nach Anspruch 10, weiter aufweisend die Schritte:
- Ablassen von unter Überdruck stehendem Fluid aus der Druckkammer (31) in die Reinigungskammer (32);
- Einrücken des Ausrückkolbens (16) durch den abfallenden Fluiddruck in der Druckkammer (31);
- Ablassen von unter Überdruck stehendem Fluid aus der Reinigungskammer (32) in die Umgebung, über den Entlüftungskanal (40, 50).

## Claims

1. A self-cleaning mechanism for a pneumatic central clutch release, comprising:
a release piston (16) that is arranged coaxially about a hollow shaft (14) and is mounted so as to be movable in the direction of an axis (A) of the hollow shaft (14);
a housing (15) that at least partially surrounds the release piston (16) so as to form a pressure chamber (31) that is located between the hollow shaft (14), the housing (15) and the release piston (16), is sealed in relation to the environment and can be connected to a fluid pressure source (60);
**characterised in that**
a cleaning chamber (32) is arranged fluidically between the pressure chamber (31) and the environment and can be connected to the environment by means of a purge channel (40, 50),
the channel cross section of the purge channel (40) is configured so as to be sufficiently small for a fluid that is present inside the cleaning chamber (32) and under positive pressure in relation to the environment to diffuse into the environment, the fluid pressure inside the cleaning chamber (32) being at least part of the time greater than an ambient pressure at least part of the time and in any event at least equal to the ambient pressure, and the self-cleaning mechanism being configured such that the fluid pressure inside the cleaning chamber (32) is increased both when the piston is engaged and when the piston is released.

2. A self-cleaning mechanism for a pneumatic central clutch release according to the preceding claim, there being provided a first valve (V1), in particular a solenoid valve, via which the pressure chamber (31) and the cleaning chamber (32) can be connected fluidically with one another.

3. A self-cleaning mechanism according to either of the preceding claims, a bearing (22a) for mounting the release piston (16) and a pneumatic seal (23a) for sealing the pressure chamber (31) are provided inside the cleaning chamber (32).

4. A self-cleaning mechanism according to any one of the preceding claims, the pressure chamber (31) and the cleaning chamber (32) being arranged relative to one another in such a way as to be actively connected together such that an increase in volume of the pressure chamber (31) causes a reduction in volume of the cleaning chamber (32).

5. A self-cleaning mechanism according to any one of the preceding claims, the pressure chamber (31) and the cleaning chamber (32) being arranged relative to one another in such a way that a displaced volume of gas is fed from the pressure chamber (31) via the first valve (V1) into the cleaning chamber (32) when the volume of the pressure chamber (31) is reduced.

6. A self-cleaning mechanism according to any one of the preceding claims, a flow diffusor being arranged fluidically between the cleaning chamber (32) and the environment.

7. A self-cleaning mechanism according to the preceding claim, the flow diffusor being a filter (41) that is arranged in the purge channel (40).

8. A self-cleaning mechanism according to any one of the preceding claims, the purge channel (40) being arranged fluidically between the cleaning chamber (32) and the environment radially outside, the purge channel (40) being configured to allow a fluid that is present inside the cleaning chamber (32) and under a positive pressure in relation to the environment to escape into the environment.

9. A self-cleaning mechanism according to any one of the preceding claims, the purge channel (50) being arranged fluidically between the cleaning chamber (32) and the environment radially outside it, the purge channel (50) being configured to allow a fluid that is present inside the cleaning chamber (32) and under a positive pressure in relation to the environment to escape into the environment.

10. A self-cleaning method for a pneumatic central clutch release according to any one claims 1 to 9, comprising the following steps:
- the application to the pressure chamber (31) of fluid under positive pressure such that the release piston (16) disengages;
- the reduction of the volume of the cleaning chamber (32) by the disengaging release piston (16);
- the purging of fluid under positive pressure from the cleaning chamber (32) into the environment via the purge channel (40, 50).

11. A self-cleaning method according to claim 10, further comprising the following steps:
- the purging of fluid under positive pressure from the pressure chamber (31) into the cleaning chamber (32);
- the engagement of the release piston (16) by means of the falling fluid pressure in the pressure chamber (31);
- the purging of fluid under positive pressure from the cleaning chamber (32) into the environment via the purge channel (40, 50).

## Revendications

1. Mécanisme d'autonettoyage pour un dispositif de débrayage central pneumatique, qui a :
un piston (16) de débrayage, qui est disposé coaxialement autour d'un arbre (14) creux et qui est monté mobile dans la direction d'un axe (A) de l'arbre (14) creux ;
une enveloppe (15) entourant au moins en partie le piston (16) de débrayage pour former, entre l'arbre (14) creux, l'enveloppe (15) et le piston (16) de débrayage, une chambre (31) sous pression, qui est rendue étanche par rapport au milieu ambiant et qui peut communiquer avec une source (60) de pression de fluide ;
**caractérisé en ce qu'**
il est monté, fluidiquement entre la chambre (31) sous pression et le milieu ambiant, une chambre (32) de nettoyage, qui peut communiquer avec le milieu ambiant par un conduit (40) de purge,
dans lequel la section transversale du conduit (40) de purge est configurée suffisamment petite, de manière à ce qu'un fluide, en surpression par rapport au milieu ambiant dans la chambre (32) de nettoyage, diffuse dans le milieu ambiant, dans lequel la pression de fluide à l'intérieur de la chambre (32) de nettoyage est au moins de temps en temps plus grande qu'une pression ambiante, mais en tous cas au moins égale à la pression du milieu ambiant, et dans lequel le mécanisme d'autonettoyage est configuré de manière à s'élever, tant lors d'un embrayage qu'également lors d'un débrayage du piston, la pression du fluide à l'intérieur de la chambre (32) de nettoyage.

2. Mécanisme d'autonettoyage pour un dispositif de débrayage central pneumatique suivant la revendication précédente, dans lequel il est prévu une première vanne (V1), en particulier une électrovanne, par laquelle la chambre (31) de pression et la chambre (32) de nettoyage peuvent communiquer entre elles fluidiquement.

3. Mécanisme d'autonettoyage pour un dispositif de débrayage central pneumatique suivant l'une des revendications précédentes, dans lequel il est prévu un palier (22a) de montage du piston (16) de débrayage et une étanchéité (23a) pneumatique pour rendre étanche la chambre (31) sous pression à l'intérieur de la chambre (32) de nettoyage.

4. Mécanisme d'autonettoyage pour un dispositif de débrayage central pneumatique suivant l'une des revendications précédentes, dans lequel la chambre (31) sous pression et la chambre de nettoyage sont disposées l'une par rapport à l'autre de manière à être en liaison d'action l'une avec l'autre, de façon à ce qu'une augmentation du volume de la chambre (31) sous pression provoque une réduction de volume de la chambre (32) de nettoyage.

5. Mécanisme d'autonettoyage pour un dispositif de débrayage central pneumatique suivant l'une des revendications précédentes, dans lequel la chambre (31) sous pression et la chambre (32) de nettoyage sont disposées l'une par rapport à l'autre de manière à ce que, s'il se produit une diminution du volume de la chambre (31) sous pression, un volume de gaz refoulé passe de la chambre (31) sous pression à la chambre (32) de nettoyage en passant par la première vanne (V1).

6. Mécanisme d'autonettoyage pour un dispositif de débrayage central pneumatique suivant l'une des revendications précédentes, dans lequel un diffuseur d'écoulement est monté fluidiquement entre la chambre (32) de nettoyage et le milieu ambiant.

7. Mécanisme d'autonettoyage pour un dispositif de débrayage central pneumatique suivant l'une des revendications précédentes, dans lequel le diffuseur d'écoulement est un filtre (41), qui est monté dans le conduit (40) de purge.

8. Mécanisme d'autonettoyage pour un dispositif de débrayage central pneumatique suivant l'une des revendications précédentes, dans lequel le conduit (40) de purge est monté fluidiquement entre la chambre (32) de nettoyage et le milieu ambiant se trouvant à l'extérieur radialement, dans lequel le conduit (40) de purge est agencé pour laisser s'échapper, dans le milieu ambiant, du fluide se trouvant à l'intérieur de la chambre (32) de nettoyage en surpression par rapport au milieu ambiant.

9. Mécanisme d'autonettoyage pour un dispositif de débrayage central pneumatique suivant l'une des revendications précédentes, dans lequel le conduit (50) de purge est monté fluidiquement entre la chambre (32) de nettoyage et le milieu ambiant se trouvant à l'intérieur radialement, dans lequel le conduit (50) de purge est agencé pour laisser s'échapper dans le milieu ambiant du fluide se trouvant à l'intérieur de la chambre (32) de nettoyage en surpression par rapport au milieu ambiant.

10. Procédé d'autonettoyage pour un dispositif de débrayage central pneumatique en débrayage suivant l'une des revendications 1 à 9, qui comporte les stades :
- alimentation de la chambre (31) sous pression en un fluide se trouvant en surpression de manière à ce que le piston (16) de débrayage débraie ;
- diminution du volume de la chambre (32) de nettoyage par le piston (16) de débrayage en débrayage ;
- évacuation de fluide en surpression de la chambre (32) de nettoyage au milieu ambiant en passant par le conduit (40, 50) de purge.

11. Procédé d'autonettoyage suivant la revendication 10, comprenant en outre les stades :
- évacuation de fluide en surpression de la chambre (31) de sous pression à la chambre (32) de nettoyage ;
- embrayage du piston (16) de débrayage par la pression décroissante du fluide dans la chambre (31) sous pression ;
- purge du fluide en surpression de la chambre (32) de nettoyage au milieu ambiant en passant par le conduit (40, 50) de purge.
